# EUROPÄISCHE PATENTANMELDUNG

(11) **EP 0 608 702 A2**
(43) Veröffentlichungstag der Anmeldung: **03.08.1994**
(21) Anmeldenummer: 94100328.7
(22) Anmeldetag: 12.01.1994
(51) Int. Cl.: A23L 1/36, A23B 9/02

(54) **Verfahren zum Behandeln von Haselnüssen**

(30) Priorität: 03.11.1993 DE 4337465
(71) Anmelder: SAGRA GIDA SANAYI VE TICARET A.S., TR-52200 Ordu (TR)
(72) Erfinder: Sagra, Ünal, D-22609 Hamburg (DE); Ertekin, Erol, TR-52100 Ordu (TR)
(74) Vertreter: DIEHL GLAESER HILTL & PARTNER

(57) **Zusammenfassung**

Die Erfindung betrifft ein Verfahren zum Behandeln von Haselnüssen, das zu einem hinsichtlich des Geschmacks besseren Haselnussprodukt führt. Die Haselnüsse werden gereinigt und sodann von Fremdstoffen befreit. Die Haselnüsse werden in ihren Schalen geröstet. Nach Abkühlung auf bis -25°C werden sie geknackt, geschält, enthäutet, gefroren und nach Größe sortiert. Schließlich wird die Feuchtigkeit auf den gewünschten Grad reduziert.

## Beschreibung

Die Erfindung bezieht sich auf ein Verfahren zum Behandeln von Haselnüssen, bei welchem die Haselnüsse gereinigt, geknackt, geschält, enthäutet und geröstet werden.

Es ist bislang üblich, in einem mechanischen Verfahren die Haselnüsse von Fremdstoffen zu befreien und diese dann zu sortieren. Die sortierten Haselnüsse werden zwischen zwei Steinen, einem festen und einem drehenden, geknackt und ausgeschält. Danach erfolgt wiederum eine Sortierung nach Größe mit dem sich daran anschließenden Röstvorgang. Danach werden die gerösteten Haselnüsse enthäutet, nochmals sortiert und verpackt.

Die geernteten Haselnüsse weisen auf der Schalenoberfläche Mikroorganismen auf, die während des Trockenvorganges, des Einsackens, des Transports und der Lagerung an die Schalenoberfläche gelangen und sich dort ausbreiten können. Während des Knackens und auch nach dem Knacken können nun diese Mikroorganismen mit der Oberfläche des Kerns in Berührung gelangen und sich dort in unerwünschter Weise mehr oder weniger stark vermehren. Darüber hinaus können auch weitere unerwünschte Fremdstoffe bei den weiteren Arbeitsvorgängen an die Kerne herangelangen.

Der Knackvorgang selbst stellt alles andere als eine schonende Behandlung der Oberflächen der Kerne dar. Die Kerne können nämlich an ihrer Oberfläche beschädigt werden, und in diesem Zusammenhang spricht man von Schlagwunden. Außerdem kann Öl an der Oberfläche der Kerne und insbesondere an den Schlagwundenstellen mit dem Sauerstoff der Luft in Kontakt gelangen, so daß das Öl oxidiert und nach mehr oder weniger langer Lagerungsdauer sogar den Geschmack der Nüsse verderben kann.

Der Erfindung liegt die Aufgabe zugrunde, ein Verfahren der eingangs genannten Art so auszugestalten, daß eine deutliche Geschmacksverbesserung bei Haselnussprodukten erzielt und sichergestellt werden kann.

Erreicht wird dies dadurch, daß bei einem Verfahren der eingangs genannten Art die Haselnüsse in den Schalen bereits vor dem Knacken geröstet werden.

Durch das Rösten der Haselnüsse in den Schalen werden die bereits erwähnten Mikroorganismen weitgehend abgetötet, so daß keine nachteilige Beeinflussung der Kerne möglich ist, selbst wenn die abgetöteten Mikroorganismen an die Oberfläche der Kerne gelangen sollten.

Selbst wenn beim Knacken Schäden an der Oberfläche der Kerne entstehen, können diese die bei bisher bekannten Verfahren eintretenden Folgen hier nicht auftreten.

Da die Röstung der Haselnüsse in den Schalen stattfindet, steigt auch die sogenannte Hautwurfquote um 15 bis 20% im Vergleich zu bisher bekannten Verfahren, zugleich erhält man eine homogenere Struktur sowie ein gleichmäßigeres Aussehen der Kerne.

Die in das System eingeführten Haselnüsse werden vorerst durch mechanische Verfahren von Fremdstoffen, wie Sand, Steinen, Staub, Glas- und Metallresten und dergleichen, befreit. Später werden sie nach ihrer Größe sortiert. Die sortierten Haselnüsse kommen in eine Schwemmeinheit. Hier werden sie bewegt und schwimmen auf der Wasseroberfläche. Die dem mechanischen System entkommenen in der Haselnussmenge untergemischten Fremdstoffe, werden infolge ihres spezifischen Gewichts zum Absetzen gebracht. Zur gleichen Zeit wird auch Staub und Schmutz von der Schalenoberfläche abgewaschen. Von den auf ein vibrierendes Sieb geführten Haselnüssen läuft das Wasser von der Oberfläche ab.

Die bis zum gewünschten Feuchtigkeitsgrad in den Schalen gerösteten Haselnüsse werden nach Abkühlung nach einem der bekannten Verfahren (durch Luftzirkulation oder SchnellGefrieren oder dergleichen) gefroren, und zwar so lange, bis ungefähr -25°C erreicht worden sind, wonach sie zwischen zwei Steinen, einem festen und einem drehenden, oder mit Hilfe von Walzen geknackt und von Schalen getrennt werden. Die durch Drehbürsten von den anhaftenden Häuten befreiten Haselnüsse werden wieder eingefroren. Sie werden dann in gefrorenem Zustand der Größe nach sortiert und durch einen elektronischen Sortierer selektiert. Auf einem Fließband werden sie transportiert und von Hand aussortiert. Sie werden wieder in Röstmaschinen bearbeitet, um ihnen die Feuchtigkeit bis zu einem gewünschten Grad zu entziehen. Anschließend werden sie direkt verpackt.

## Patentansprüche

1. Verfahren zum Behandeln von Haselnüssen, bei welchem die Haselnüsse gereinigt, geknackt, geschält, enthäutet und geröstet werden, dadurch gekennzeichnet, daß die Haselnüsse in ihren Schalen vor dem Knacken geröstet werden.
